# EUROPEAN PATENT SPECIFICATION

(11) **EP 2 744 173 B1**
(45) Date of publication and mention of the grant of the patent: **15.08.2018**
(21) Application number: 12878208.3
(22) Date of filing: 26.10.2012
(51) Int. Cl.: H04L 29/08, G06F 17/30

(54) **MULTIPLE-SERVICE PROCESSING METHOD AND BROWSER**
VERARBEITUNGSVERFAHREN FÜR MEHRERE DIENSTE UND BROWSER
PROCÉDÉ DE TRAITEMENT DE SERVICES MULTIPLES ET NAVIGATEUR

(43) Date of publication of application: 18.06.2014
(73) Proprietor: Huawei Device (Dongguan) Co., Ltd., Dongguan, Guangdong, PRC, 523808 (CN)
(72) Inventor: GAO, Wenmei, Shenzhen, Guangdong 518129 (CN); FAN, Shunan, Shenzhen, Guangdong 518129 (CN); LV, Xiaoqiang, Shenzhen, Guangdong 518129 (CN); WANG, Yahui, Shenzhen, Guangdong 518129 (CN); JING, Hao, Shenzhen, Guangdong 518129 (CN)
(74) Representative: Pfenning, Meinig & Partner mbB
(86) International application number: PCT/CN2012/083585
(87) International publication number: WO 2014/063352

(56) References cited:
- EP-A2- 1 229 688
- CN-A- 1 598 800
- CN-A- 101 222 483
- CN-A- 101 500 001
- CN-A- 102 681 998
- US-A1- 2004 073 613
- US-A1- 2012 221 696
- US-B1- 7 185 342
- KAZUHIRO NAKAO ET AL: "Toward Remote Service Invocation in Android", UBIQUITOUS INTELLIGENCE&COMPUTING AND 9TH INTERNATIONAL CONFERENCE ON AUTONOMIC&TRUSTED COMPUTING (UIC/ATC), 2012 9TH INTERNATIONAL CONFERENCE ON, IEEE, 4 September 2012 (2012-09-04), pages 612-617, XP032255149, DOI: 10.1109/UIC-ATC.2012.22 ISBN: 978-1-4673-3084-8

## Description

### TECHNICAL FIELD

Embodiments of the present invention relate to computer technologies, and in particular, to a processing method for multiple services and a browser.

### BACKGROUND

Web Intents (intent) is a mechanism and a framework for discovering and remotely invoking a Web application, and a variety of Web applications can be integrated through the Web Intents. An Intent client (Intent client) is a client of the Web Intents, and is used to create an Intent object and send an Intent request to an Intent service (Intent service) through a browser (Browser). The Intent service is a service which can process an intent request, and returns a processing result to the Intent client through the browser (Browser), and usually, the Intent service is displayed in a form of a web page to a user.

Picture editing is a typical example of the application of the Web Intents. First, a user opens a browser of the Intent client, invokes a picture, and clicks an Edit button on the browser to send out an Intent request to edit the picture. Triggered by the Edit button, the browser pops up a window for the user, the window lists all Intent services which can process the Intent request; after selecting a connection of an Intent service, the user enters a service page of the Intent service, and meanwhile, the picture is invoked into the service page of the Intent service. After the Intent service edits the picture, the user clicks a save button and returns to a page of the Intent client. The edited picture is transferred to the browser, the browser transfers the picture to the Intent client, and the Intent client displays the edited picture to the user.

However, the browser can merely enable the user to use an Intent service at one time, and cannot enable the user to continuously use multiple Intent services at one time. If the user needs to use multiple Intent services, after execution of a previous Intent service ends, the user needs to return to the page of the Intent client to make the browser to pop up all services which can process the Intent request, and then the user selects another Intent service from the window popped up by the browser. Therefore, when the user needs to use multiple Intent services, the user needs to repeatedly perform all steps performed for an Intent service. This results in low use efficiency of the Intent services.
US2012/0221696A only discloses systems and methods for identifying alternative cloud data distribution services from alternative providers and generating a selection of cloud data distribution service based on the transport parameters of data payload of a user network.

### SUMMARY

The present invention is as defined in the appended independent claims. Embodiments of the present invention provide a processing method as defined in claim 1 for multiple services and browser devices as defined in claims 6 and 11, so as to solve a defect that multiple Intent services cannot be continuously used at one time, thereby improving use efficiency of Intent services.

In the foregoing technical solutions, after receiving multiple Intent services at one time, a browser successively makes, according to an execution sequence of the Intent services, all the foregoing Intent services process Intent data transmitted by the browser. After each Intent service ends processing, the browser transmits, to a next Intent service or all the foregoing Intent services, Intent data returned by a current Intent service until a last Intent service ends processing. Therefore, according to the method provided in this embodiments, a user can be enabled to continuously use multiple Intent services at one time; after a previous Intent service ends, the user does not need to return to an Intent client again to select, in a case of triggering of the client, a next Intent service from the browser, thereby improving use efficiency of the Intent services.

In the foregoing technical solutions, after receiving multiple Intent service identifiers at one time, a browser first transmits, to all selected Intent services, Intent data transmitted by a client to activate all the selected Intent services, and then successively makes, according to an execution sequence of the Intent services, each service process the Intent data transmitted by the browser. After a current Intent service ends, Intent data is transmitted to all the selected Intent services and the client through the browser, and the Intent client and a service page of the current Intent service can synchronously display same Intent data. Therefore, when a user needs to continuously use multiple Intent services, after a previous Intent service ends, the user does not need to return to the Intent client again to select, in a case of triggering of the client, a next Intent service from the browser, thereby improving use efficiency of the Intent services. The Intent data displayed by the Intent client is kept synchronized with data obtained through processing by the current Intent service.

### BRIEF DESCRIPTION OF DRAWINGS

FIG. 1 is a flowchart of a processing method for multiple Intent services according to an embodiment of the present invention;
FIG. 2 is a flowchart of another processing method for multiple Intent services according to an embodiment of the present invention;
FIG. 3 is a flowchart of still another processing method for multiple Intent services according to an embodiment of the present invention;
FIG. 4 is a flowchart of yet another processing method for multiple Intent services according to an embodiment of the present invention;
FIG. 5 is a flowchart of yet another processing method for multiple Intent services according to an embodiment of the present invention;
FIG. 6 is a schematic structural diagram of a browser according to an embodiment of the present invention; and
FIG. 7 is a schematic structural diagram of another browser according to an embodiment of the present invention.

### DESCRIPTION OF EMBODIMENTS

In embodiments of the present invention, an Intent client is improved, thereby enabling a user to continuously use multiple Intent services at one time and enabling Intent data to be synchronized between multiple Intent services selected by the user.

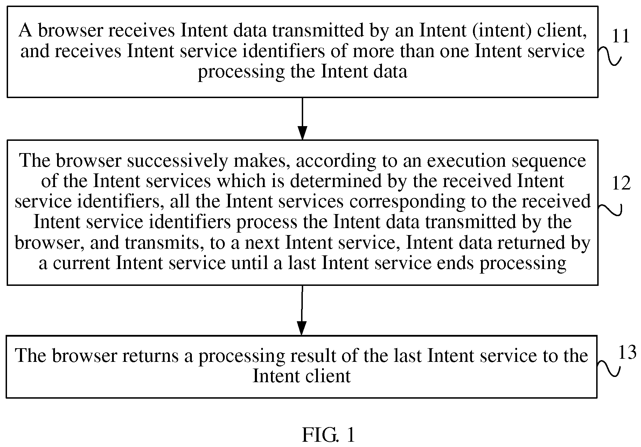

FIG. 1 is a flowchart of a processing method for multiple Intent services according to an embodiment of the present invention. As shown in FIG. 1, the method provided in this embodiment includes:
Step 11: A browser receives Intent data transmitted by an Intent (intent) client, and receives Intent service identifiers of more than one Intent service processing the Intent data.

A user opens an Intent client, and the Intent client acquires Intent data, for example, acquires Intent data provided by the user. Specifically, the Intent client may receive Intent data input or selected by the user. After acquiring the Intent data, the Intent client sends out an Intent request to a browser to transmit the acquired Intent data to the browser. After receiving the Intent request, the browser receives Intent service identifiers of more than one Intent service processing the Intent data; specifically, the browser may receive more than one Intent service identifier input or selected by the user. An Intent service identifier may be a connection name of an Intent service.

Step 12: The browser successively makes, according to an execution sequence of the Intent services which is determined by the received Intent service identifiers, all the Intent services corresponding to the received Intent service identifiers process the Intent data transmitted by the browser, and transmits, to a next Intent service, Intent data returned by a current Intent service until a last Intent service ends processing.

The browser may determine, according to a processing logic preset by the browser and the received Intent service identifiers, the execution sequence of the Intent services corresponding to all the received Intent service identifiers. The browser may also determine the execution sequence of all the foregoing Intent services according to an execution sequence which is of the Intent services and is selected by the user through the Intent service identifiers. For example, after execution of the current Intent service ends, the browser may prompt the user to select a next to-be-executed Intent service from all the Intent services selected in step 11, and determine the next Intent service according to selection of the user.

The browser first determines a first to-be-executed Intent service, that is, a first Intent service, among all the foregoing Intent services according to the execution sequence of the foregoing Intent services, and makes the first Intent service process the Intent data transmitted by the Intent client. After ending processing, the first Intent service returns Intent data obtained through processing to the browser. After that, the browser determines a second Intent service according to the execution sequence of the Intent services, transmits the Intent data obtained through processing by the first Intent service to the second Intent service, and makes the second Intent service process the Intent data returned by the first Intent service, and the rest may be deduced by analogy. After ending processing, each Intent service returns processed Intent data to the browser, and the browser transmits, to a next Intent service or all Intent services selected by the user, Intent data returned by a current Intent service. The browser transmits, to the client, data returned by the last Intent service, and the client displays a final processing result to the user.

Step 13: The browser returns a processing result of the last Intent service to the Intent client.

In a technical solution provided in this embodiment, after receiving multiple Intent services at one time, a browser successively makes, according to an execution sequence of the Intent services, all the foregoing Intent services process Intent data transmitted by the browser. After each Intent service ends processing, the browser transmits, to a next Intent service or to all the foregoing Intent services, Intent data returned by a current Intent service until a last Intent service ends processing. Therefore, according to the method provided in this embodiment, a user can be enabled to continuously use multiple Intent services at one time; after a previous Intent service ends, the user does not need to return to an Intent client again to select, in a case of triggering of the client, a next Intent service from the browser, thereby improving use efficiency of the Intent services.

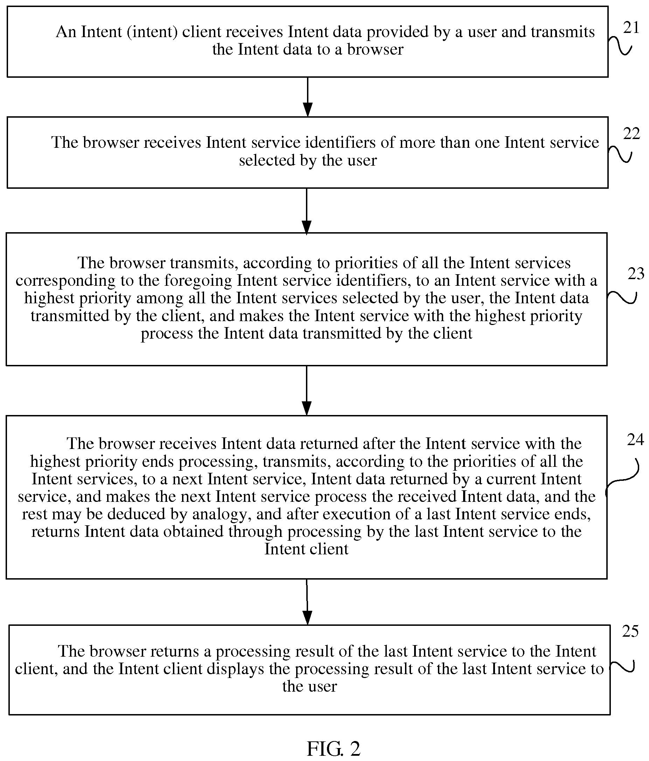

FIG. 2 is a flowchart of another processing method for multiple Intent services according to an embodiment of the present invention. This embodiment is a possible implementation manner of the embodiment corresponding to FIG. 1. As shown in FIG. 2, the method provided in this embodiment includes:
Step 21: An Intent (intent) client receives Intent data provided by a user and transmits the Intent data to a browser.
Step 22: The browser receives Intent service identifiers of more than one Intent service selected by the user.

The user opens the Intent client, and may input or select Intent data through the Intent client. The Intent client is usually displayed in a form of a web page. After inputting or selecting the Intent data, the user clicks a button or another control on the Intent client to send out an Intent request, so as to make the Intent client transmit the Intent data provided by the user to the browser. After receiving the Intent request, the browser pops up a dialog box, where the dialog box lists identifiers of all Intent services which can process the Intent request. For example, a CheckBox control provides all Intent services, and the user may select multiple Intent services through the CheckBox control. An Intent service identifier may be a connection name of an Intent service.

Step 23: The browser transmits, according to priorities of all the Intent services corresponding to the foregoing Intent service identifiers, the Intent data transmitted by the client to an Intent service with a highest priority among all the Intent services selected by the user, and makes the Intent service with the highest priority process the Intent data transmitted by the client.

Information of each Intent service includes at least an Intent service identifier and a URL address for storing the Intent service; furthermore, the information of each Intent service further includes a priority of the Intent service. The browser creates a container to store Intent service identifiers of the Intent services and store URL addresses and priorities of the services. The browser may acquire a current state, an address, and a priority of an Intent service through an Intent service identifier.

The priorities of all the foregoing Intent services may be determined through the following method: The browser may preset priorities of all the Intent services which can process an Intent request; for example, a location sequence of the Intent services on a user interface (User Interface, UI for short) is a priority sequence by default; after receiving Intent service identifiers of more than one Intent service selected by the user, the browser determines, according to the preset priorities of the Intent services, the priorities of all the Intent services selected by the user. After receiving the Intent service identifiers of the more than one Intent service selected by the user, the browser may also receive a priority set by the user for each selected Intent service.

After the user selects the Intent service identifiers, the browser selects an Intent service with a highest priority from the foregoing container, opens a service page of the Intent service with the highest priority according to a URL address, transmits an Intent object including the Intent data to the web page of the Intent service with the highest priority, and makes the Intent service with the highest priority process the Intent data, that is, activates the Intent service with the highest priority. After ending processing, the Intent service with the highest priority returns the Intent data obtained through processing to the browser.

For example, in the dialog box popped up by the browser, the CheckBox control lists all the Intent services, the user selects multiple Intent services through the CheckBox control, the Intent services selected by the user automatically enter a List control; and in this case, the browser may sort the Intent services in the List control according to the priorities of the Intent services. After the user clicks a Start Service button in the dialog box popped up by the browser, the browser selects the Intent service with the highest priority from the foregoing container, transmits the Intent object including the Intent data to the service page of the Intent service with the highest priority, so as to activate the Intent service with the highest priority.

Step 24: The browser receives Intent data returned after the Intent service with the highest priority ends the processing, transmits, according to the priorities of all the Intent services, to a next Intent service, Intent data returned by a current Intent service, and makes the next Intent service process the received Intent data, and the rest may be deduced by analogy, and after execution of a last Intent service ends, returns Intent data processed by the last Intent service to the Intent client.

Step 25: The browser returns a processing result of the last Intent service to the Intent client, and the Intent client displays the processing result of the last Intent service to the user.

After receiving the Intent data returned by the Intent service with the highest priority, the browser determines the next Intent service according to the priorities set by the user for the Intent services, opens a service page of the next Intent service, transmits, to the next Intent service, the Intent data returned by the Intent service with the highest priority to activate the next Intent service, and then closes the service page of the Intent service with the highest priority, and the rest may be deduced by analogy. When the last Intent service ends processing, the browser returns to the Intent client, and returns the Intent data processed by the last Intent service to the Intent client, that is, a final processing result.

In this embodiment, when the user continuously uses multiple Intent services, the browser successively makes, through the priorities of the Intent services, each Intent service selected by the user process the data transmitted by the browser. Therefore, when the user needs to continuously use multiple Intent services, after a previous Intent service ends, the user does not need to return to the Intent client again to select, in a case of triggering of the client, a next Intent service from the browser, thereby improving use efficiency of the Intent services.

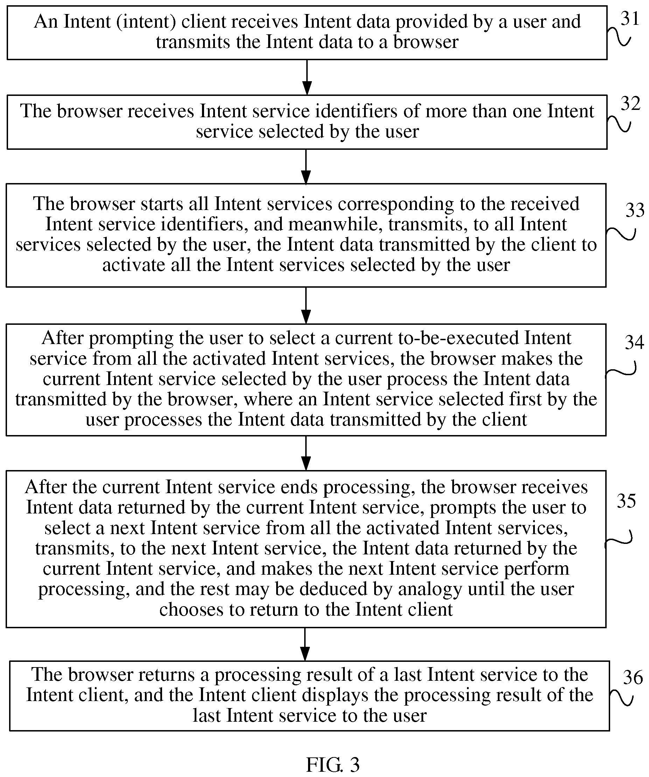

FIG. 3 is a flowchart of still another processing method for multiple Intent services according to an embodiment of the present invention. This embodiment is another possible implementation manner of the embodiment corresponding to FIG. 1. A main difference between this embodiment and the embodiment corresponding to FIG. 2 is that a browser simultaneously activates all Intent services selected by a user, and transmits Intent data provided by the user to all the Intent services; the user successively selects an Intent service to process the Intent data, and after a current Intent service ends processing, the browser makes, according to selection of the user, a next Intent service start processing. However, in the embodiment corresponding to FIG. 2, the browser automatically determines, according to priorities of the Intent services, an execution sequence of the selected Intent services. Intent data transmitted by a client is transmitted to an Intent service with a highest priority.

As shown in FIG. 3, the method provided in this embodiment includes:
Step 31: An Intent (intent) client receives Intent data provided by a user and transmits the Intent data to a browser.
Step 32: The browser receives Intent service identifiers of more than one Intent service selected by the user.

The user opens the Intent client, and may input or select Intent data through the Intent client. The Intent client is usually displayed in a form of a web page. After inputting or selecting the Intent data, the user clicks a button or another control on the Intent client to send out an Intent request, so as to make the Intent client transmit the Intent data provided by the user to the browser. After receiving the Intent request, the browser pops up a dialog box, where the dialog box lists identifiers of all Intent services which can process the Intent request. For example, a CheckBox control provides all Intent services, and the user may select multiple Intent services through the CheckBox control. An Intent service identifier may be a connection name of an Intent service.

Step 33: The browser starts all the Intent services corresponding to the received Intent service identifiers, and meanwhile, transmits, to all the Intent services selected by the user, the Intent data transmitted by the client to activate all the Intent services selected by the user.

Through the Intent service identifiers selected by the user, the browser first acquires a URL address for storing an Intent service from a container created for the Intent services, and then starts the Intent service according to the URL address; specifically, opens a service page of the Intent service, and meanwhile, transmits the Intent data provided by the user to the started Intent service. If an Intent service is started, that is, a service page is opened, and the Intent data which is transmitted by the client and is to be processed is received, it indicates that the Intent service is activated. In this embodiment, the browser activates all the Intent services selected by the user, that is, simultaneously starts all the Intent services selected by the user, and simultaneously transmits the Intent data provided by the user to all the started Intent services.

Step 34: After prompting the user to select a current to-be-executed Intent service from all the activated Intent services, the browser makes the current Intent service selected by the user process the Intent data transmitted by the browser, where an Intent service selected first by the user processes the Intent data transmitted by the client.

After activating all the Intent services selected by the user, the browser pops up a dialog box to prompt the user to select, through an Intent service identifier, the Intent service to be currently executed; after the user selects the current to-be-executed Intent service, that is, the current Intent service, the browser makes the current Intent service process the Intent data transmitted by the browser. If the current Intent service is a first to-be-executed Intent service, the Intent data provided by the user and transmitted by the browser is processed.

Step 35: After the current Intent service ends processing, the browser receives Intent data returned by the current Intent service, prompts the user to select a next Intent service from all the activated Intent services, transmits, to the next Intent service, the Intent data returned by the current Intent service, and makes the next Intent service perform processing, and the rest may be deduced by analogy until the user chooses to return to the Intent client.

Step 36: The browser returns a processing result of a last Intent service to the Intent client, and the Intent client displays the processing result of the last Intent service to the user.

After ending the processing, the current Intent service returns the Intent data obtained through processing to the browser. After receiving the Intent data returned by the current Intent service, the browser pops up a dialog box, where the dialog box includes all the Intent service identifiers selected by the user. The dialog box is used to prompt the user to select or confirm a next to-be-executed Intent service, that is, a next Intent service. It should be noted that, in this embodiment, an Intent service may be selected by the user for multiple times, for example, the user first selects an Intent service A, then selects an Intent service B, and then selects the Intent service A again.

After the user selects the next Intent service, the browser transmits, to a service page of the next Intent service, the Intent data returned by the current Intent service to overwrite the Intent data previously transmitted by the browser. Specifically, the browser creates an Intent object for each Intent service, and establishes a mapping relationship between the Intent service and the Intent object. Through an Intent object of the current Intent service, the browser transmits the Intent data obtained through processing to an Intent object of the next Intent service. Furthermore, if the service page of the next Intent service selected by the user is closed, the service page is reopened according to the Intent service identifier.

Furthermore, when the current Intent service ends the processing, the dialog box popped up by the browser further includes the Intent client. When the current Intent service ends the processing, if what is selected by the user is the Intent client, the browser returns to the Intent client, and returns the Intent data returned by the last Intent service to the Intent client.

In this embodiment, when the user continuously uses multiple Intent services, the browser first activates all the Intent services selected by the user, successively makes, according to an execution sequence of the Intent services selected by the user, each service process the Intent data transmitted by the browser, and when the current Intent service ends, the Intent data is transmitted, through the browser, to the next Intent service selected by the user. Therefore, when the user needs to continuously use multiple Intent services, after a previous Intent service ends, the user does not need to open the Intent client again to select a next Intent service in the browser, thereby improving use efficiency of the Intent services.

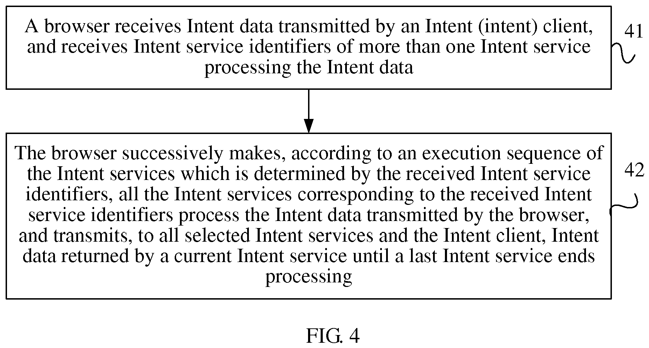

FIG. 4 is a flowchart of yet another processing method for multiple Intent services according to an embodiment of the present invention. A main difference between this embodiment and the embodiment corresponding to FIG. 1 is that a browser transmits, to Intent services corresponding to all received Intent service identifiers and an Intent client, Intent data returned by a current Intent service, and makes the Intent client and a service page of the current Intent service synchronously display same Intent data. As shown in FIG. 4, the method provided in this embodiment includes:
Step 41: A browser receives Intent data transmitted by an Intent (intent) client, and receives Intent service identifiers of more than one Intent service processing the Intent data.

A user opens an Intent client, and the Intent client acquires Intent data, for example, acquires Intent data provided by the user. Specifically, the Intent client may receive Intent data input or selected by the user. After acquiring the Intent data, the Intent client sends out an Intent request to a browser to transmit the acquired Intent data to the browser. After receiving the Intent request, the browser receives Intent service identifiers of more than one Intent service processing the Intent data; specifically, the browser may receive more than one Intent service identifier input or selected by the user. An Intent service identifier may be a connection name of an Intent service.

Step 42: The browser successively makes, according to an execution sequence of the Intent services which is determined by the received Intent service identifiers, all the Intent services corresponding to the received Intent service identifiers process the Intent data transmitted by the browser, and transmits, to all selected Intent services and the Intent client, Intent data returned by a current Intent service until a last Intent service ends processing.

The browser may determine, according to a processing logic preset by the browser and the received Intent service identifiers, the execution sequence of the Intent services corresponding to all the received Intent service identifiers. The browser may also determine the execution sequence of all the foregoing Intent services according to the execution sequence of the Intent services selected by the user through the Intent service identifiers. The browser first determines a first to-be-executed Intent service, that is, a first Intent service, among all the foregoing Intent services according to the execution sequence of the foregoing Intent services, and makes the first Intent service process the Intent data transmitted by the Intent client. After ending processing, the first Intent service returns Intent data obtained through processing to the browser. Then, the browser transmits the Intent data obtained through processing by the first Intent service to all the Intent services and the Intent client. The browser determines a second Intent service according to the Intent services selected by the user through the Intent service identifiers, and makes the second Intent service process the Intent data returned by the first Intent service, and the rest may be deduced by analogy. After ending processing, each Intent service returns processed Intent data to the browser, and the browser transmits, to all the Intent services and the Intent client, the Intent data returned by a current Intent service; therefore, the Intent client and a service page of the current Intent service can synchronously display same Intent data.

In this embodiment, after receiving multiple Intent service identifiers at one time, a browser first transmits, to all selected Intent services, Intent data transmitted by a client to activate all the selected Intent services, and then successively makes, according to an execution sequence of the Intent services, each service process the Intent data transmitted by the browser. After a current Intent service ends, Intent data is transmitted to all the selected Intent services and the client through the browser, and the Intent client and a service page of the current Intent service can synchronously display same Intent data. Therefore, when a user needs to continuously use multiple Intent services, after a previous Intent service ends, the user does not need to return to the Intent client again to select, in a case of triggering of the client, a next Intent service from the browser, thereby improving use efficiency of the Intent services. The Intent data displayed by the Intent client is kept synchronized with data obtained through processing by the current Intent service.

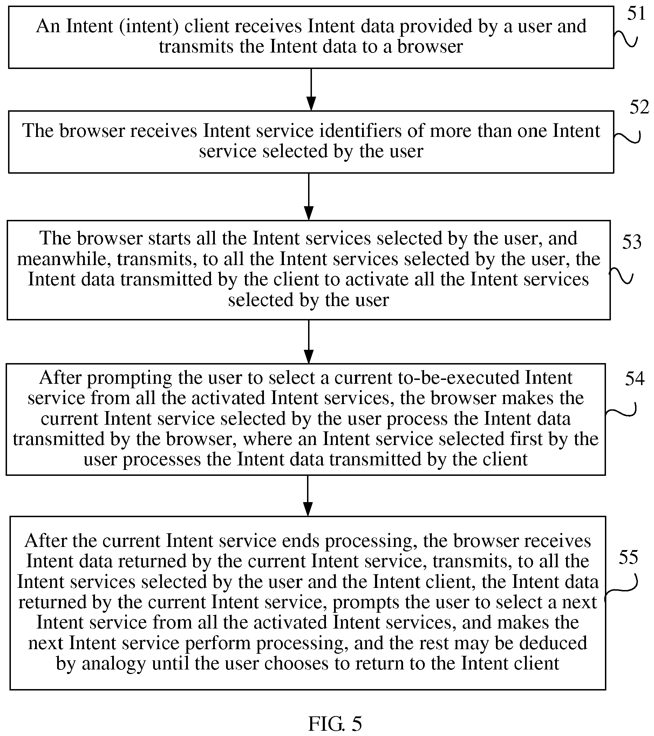

FIG. 5 is a flowchart of yet another processing method for multiple Intent services according to an embodiment of the present invention. This embodiment is a possible implementation manner of the embodiment corresponding to FIG. 4, and a main difference between this embodiment and the embodiment corresponding to FIG. 3 is that when a current Intent service returns data obtained through processing, a browser transmits, to all Intent services selected by a user and a client, the Intent data obtained through processing and returned by the current Intent service, and then prompts the user to select a next Intent service. However, in the embodiment corresponding to FIG. 3, the browser first prompts the user to select the next Intent service, and then transmits, to the next Intent service, the Intent data returned by the current Intent service.

As shown in FIG. 5, the method provided in this embodiment includes:
Step 51: An Intent (intent) client receives Intent data provided by a user and transmits the Intent data to a browser.
Step 52: The browser receives Intent service identifiers of more than one Intent service selected by the user.

The user opens the Intent client, and may input or select Intent data through the Intent client. The Intent client is usually displayed in a form of a web page. After inputting or selecting the Intent data, the user clicks a button or another control on the Intent client to send out an Intent request, so as to make the Intent client transmit the Intent data provided by the user to the browser. After receiving the Intent request, the browser pops up a dialog box, where the dialog box lists identifiers of all Intent services which can process the Intent request. For example, a CheckBox control provides all Intent services, and the user may select multiple Intent services through the CheckBox control. An Intent service identifier may be a connection name of an Intent service.

Step 53: The browser starts all the Intent services selected by the user, and meanwhile, transmits, to all the Intent services selected by the user, the Intent data transmitted by the client to activate all the Intent services selected by the user.

Through the Intent service identifiers selected by the user, the browser first acquires a URL address for storing an Intent service from a container created for the Intent services, and then starts the Intent service according to the URL address; specifically, opens a service page of the Intent service according to the URL address, and meanwhile, transmits the Intent data provided by the user to the started Intent service. If an Intent service is started, that is, a service page is opened, and if the Intent data which is transmitted by the browser and is to be processed is received, it indicates that the Intent service is activated. In this embodiment, the browser activates all the Intent services selected by the user, that is, simultaneously starts all the Intent services selected by the user, and simultaneously transmits the Intent data provided by the user to all the started Intent services.

Step 54: After prompting the user to select a current to-be-executed Intent service from all the activated Intent services, the browser makes the current Intent service selected by the user process the Intent data transmitted by the browser, where an Intent service selected first by the user processes the Intent data transmitted by the client.

After activating all the Intent services selected by the user, the browser pops up a dialog box to prompt the user to select an Intent service to be currently executed, where the dialog box includes all the Intent service identifiers selected by the user. After the user selects the current to-be-executed Intent service, that is, the current Intent service, which herein is a first to-be-executed service. If the current Intent service is the first to-be-executed Intent service, the Intent data transmitted by the client is processed.

Step 55: After the current Intent service ends processing, the browser receives Intent data returned by the current Intent service, transmits, to all the Intent services selected by the user and the Intent client, the Intent data returned by the current Intent service, prompts the user to select a next Intent service from all the activated Intent services, and makes the next Intent service perform processing, and the rest may be deduced by analogy until the user chooses to return to the Intent client.

After ending the processing, the current Intent service returns the Intent data obtained through processing to the browser. After receiving the Intent data returned by the current Intent service, the browser transmits, to service pages of all the Intent services selected by the user and the Intent client, the Intent data returned by the current Intent service. Then, the browser pops up a dialog box, where the dialog box includes all the Intent service identifiers selected by the user. The dialog box is used to prompt the user to select a next to-be-executed Intent service, that is, a next Intent service. It should be noted that, in this embodiment, an Intent service may be selected by the user for multiple times, for example, the user first selects an Intent service A, then selects an Intent service B, and then selects the Intent service A again.

After transmitting, to all the Intent services, the Intent data returned by the current Intent service, the browser overwrites the Intent data transmitted by the browser before the current service is executed. Specifically, the browser creates an Intent object, and transmits, through the Intent object, to the next Intent service, the Intent data returned by the current Intent service. Furthermore, if a service page of the next Intent service selected by the user is closed, the service page is reopened according to an Intent service identifier.

After the browser transmits, to the Intent client, the Intent data returned by the current Intent service, the Intent client and a service page of the current Intent service synchronously display same Intent data.

Furthermore, the dialog box popped up by the browser further includes the Intent client. After the current Intent service ends the processing, if what is selected by the user is the Intent client, the browser returns to the Intent client.

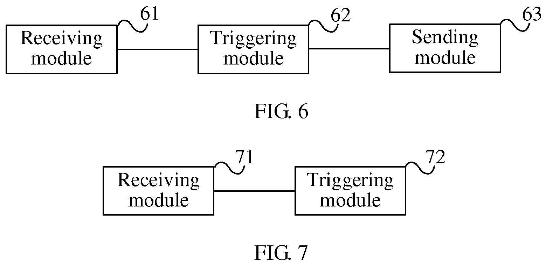

FIG. 6 is a schematic structural diagram of a browser according to an embodiment of the present invention. As shown in FIG. 6, the browser provided in this embodiment includes a receiving module 61, a triggering module 62, and a sending module 63.

The receiving module 61 is configured to receive Intent data transmitted by an Intent client, receive Intent service identifiers of more than one Intent service processing the Intent data, and transmit the Intent data and all Intent service identifiers corresponding to the received Intent service identifiers to the triggering module.

The triggering module 62 is configured to successively make, according to an execution sequence of the Intent services which is determined by the received Intent service identifiers, all the Intent services corresponding to the received Intent service identifiers process the Intent data transmitted by the browser, and transmit, to a next Intent service, Intent data returned by a current Intent service until a last Intent service ends processing, and return a processing result of the last Intent service to the sending module.

The sending module 63 is configured to return the processing result of the last Intent service to the Intent client.

For functions of the foregoing modules, reference may be made to description of the embodiment corresponding to FIG. 1, and details are not repeatedly described herein.

In a technical solution provided in this embodiment, after receiving multiple Intent services at one time, a browser successively makes, according to an execution sequence of the Intent services, all the foregoing Intent services process Intent data transmitted by the browser. After each Intent service ends processing, the browser transmits, to a next Intent service or to all the foregoing Intent services, Intent data returned by a current Intent service until a last Intent service ends processing. Therefore, according to the method provided in this embodiment, a user can be enabled to continuously use multiple Intent services at one time; after a previous Intent service ends, the user does not need to return to an Intent client again to select, in a case of triggering of the client, a next Intent service from the browser, thereby improving use efficiency of the Intent services.

A possible implementation manner of the foregoing triggering module 62 is that:
the triggering module is further configured to transmit, according to priorities of all the Intent services corresponding to the received Intent service identifiers, to an Intent service with a highest priority among all the Intent services, the Intent data transmitted by the Intent client, and make the Intent service with the highest priority process the Intent data transmitted by the client.

The triggering module is further configured to receive Intent data returned after the Intent service with the highest priority ends processing, transmit, according to the priorities of all the Intent services, to the next Intent service, Intent data returned by the current Intent service, and make the next Intent service process received Intent data, and the rest may be deduced by analogy until execution of the last Intent service ends.

Optionally, the triggering module is further configured to, after receiving the Intent service identifiers of the more than one Intent service, determine priorities of all the Intent services according to preset priorities of the Intent services, or receive priorities set by the user for all the Intent services.

For functions of the foregoing modules, reference may be made to description of the embodiment corresponding to FIG. 2, and details are not repeatedly described herein.

In this embodiment, when the user continuously uses multiple Intent services, the browser successively makes, through the priorities of the Intent services, each Intent service selected by the user process the data transmitted by the browser. Therefore, when the user needs to continuously use multiple Intent services, after a previous Intent service ends, the user does not need to return to the Intent client again to select, in a case of triggering of the client, a next Intent service from the browser, thereby improving use efficiency of the Intent services.

Another possible implementation manner of the foregoing triggering module 62 is that: a function of the triggering module 62 is implemented through the following units:
an activating unit, configured to start all the Intent services corresponding to the received Intent service identifiers, and meanwhile, transmit, to all the Intent services, the Intent data transmitted by the client to activate all the Intent services; and
a triggering unit, configured to, after prompting the user to select a current to-be-executed Intent service from all the activated Intent services, make the current Intent service selected by the user process the Intent data transmitted by the browser, where an Intent service selected first by the user processes the Intent data transmitted by the client.

The triggering unit is further configured to, after the current Intent service ends processing, receive Intent data returned by the current Intent service, prompt the user to select the next Intent service from all the activated Intent services, transmit, to the next Intent service, the Intent data returned by the current Intent service, and make the next Intent service perform processing and the rest may be deduced by analogy until the user chooses to return to the Intent client.

For functions of the foregoing modules, reference may be made to description of the embodiment corresponding to FIG. 3, and details are not repeatedly described herein.

In this embodiment, when the user continuously uses multiple Intent services, the browser first activates all the Intent services selected by the user, successively makes, according to the execution sequence of the Intent services selected by the user, each service process the Intent data transmitted by the browser, and when the current Intent service ends, the Intent data is transmitted, through the browser, to the next Intent service selected by the user. Therefore, when the user needs to continuously use multiple Intent services, after a previous Intent service ends, the user does not need to open the Intent client again to select a next Intent service in the browser, thereby improving use efficiency of the Intent services.

FIG. 7 is a schematic structural diagram of a browser according to an embodiment of the present invention. As shown in FIG. 7, the browser provided in this embodiment includes a receiving module 71 and a triggering module 72.

The receiving module 71 is configured to receive Intent data transmitted by an Intent client, receive Intent service identifiers of more than one Intent service processing the Intent data, and transmit the Intent data and all the Intent service identifiers corresponding to the received Intent service identifiers to the triggering module 72.

The triggering module 72 is configured to successively make, according to an execution sequence of the Intent services which is determined by the received Intent service identifiers, all the Intent services corresponding to the received Intent service identifiers process the Intent data transmitted by the browser, and transmit, to all selected Intent services and the Intent client, Intent data returned by a current Intent service until a last Intent service ends processing.

For functions of the foregoing modules, reference may be made to description of the embodiment corresponding to FIG. 4, and details are not repeatedly described herein.

In this embodiment, after receiving multiple Intent service identifiers at one time, a browser first transmits, to all selected Intent services, Intent data transmitted by a client to activate all the selected Intent services, and then successively makes, according to an execution sequence of the Intent services, each service process the Intent data transmitted by the browser. After a current Intent service ends, Intent data is transmitted to all the selected Intent services and the client through the browser, and the Intent client and a service page of the current Intent service can synchronously display same Intent data. Therefore, when a user needs to continuously use multiple Intent services, after a previous Intent service ends, the user does not need to return to the Intent client again to select, in a case of triggering of the client, a next Intent service from the browser, thereby improving use efficiency of the Intent services. The Intent data displayed by the Intent client is kept synchronized with data obtained through processing by the current Intent service.

A possible implementation manner of the foregoing triggering module 72 is that a function of the triggering module 72 is implemented through the following units:
an activating unit, configured to start all the Intent services corresponding to the received Intent service identifiers, and meanwhile, transmit, to all the Intent services, the Intent data transmitted by the client to activate all the Intent services;
a triggering unit, configured to, after prompting the user to select a current to-be-executed Intent service from all the activated Intent services, make the current Intent service selected by the user process the Intent data transmitted by the browser, where an Intent service selected first by the user processes the Intent data transmitted by the client; and
a transmitting unit, configured to, after the current Intent service ends processing, receive Intent data returned by the current Intent service, and transmit, to all the Intent services and the Intent client, the Intent data returned by the current Intent service, where
the triggering unit is configured to prompt the user to select a next Intent service from all the activated Intent services, and make the next Intent service perform processing, and the rest may be deduced by analogy until the user chooses to return to the Intent client.

For functions of the foregoing modules, reference may be made to description of the embodiment corresponding to FIG. 6, and details are not repeatedly described herein.

After ending the processing, the current Intent service returns the Intent data obtained through processing to the browser. After receiving the Intent data returned by the current Intent service, the browser transmits, to service pages of all the Intent services selected by the user and the Intent client, the Intent data returned by the current Intent service. Then, the browser pops up a dialog box, where the dialog box includes all the Intent service identifiers selected by the user. The dialog box is used to prompt the user to select a next to-be-executed Intent service, that is, a next Intent service. It should be noted that, in this embodiment, an Intent service may be selected by the user for multiple times, for example, the user first selects an Intent service A, then selects an Intent service B, and then selects the Intent service A again.

After transmitting, to all the Intent services, the Intent data returned by the current Intent service, the browser overwrites the Intent data transmitted by the browser before the current service is executed. Specifically, the browser creates an Intent object, and transmits, through the Intent object, to the next Intent service, the Intent data returned by the current Intent service. Furthermore, if a service page of the next Intent service selected by the user is closed, the service page is reopened according to an Intent service identifier.

After the browser transmits, to the Intent client, the Intent data returned by the current Intent service, the Intent client and a service page of the current Intent service synchronously display same Intent data.

Furthermore, the dialog box popped up by the browser further includes the Intent client. After the current Intent service ends the processing, if what is selected by the user is the Intent client, the browser returns to the Intent client.

An embodiment of the present invention further provides a browser, including a processor, a communication interface, a memory, and a bus, the communication interface, and the memory implement communication with each other through the bus;
the communication interface is configured to receive Intent data transmitted by an Intent client, and receive Intent service identifiers of more than one Intent service processing the Intent data;
the processor is configured to execute a program;
the memory is configured to store the program; where
the program is configured to successively make, according to an execution sequence of the Intent services which is determined by the received Intent service identifiers, all the Intent services corresponding to the received Intent service identifiers process the Intent data transmitted by the browser, and transmit, to a next Intent service, Intent data returned by a current Intent service until a last Intent service ends processing; and
the communication interface is further configured to return a processing result of the last Intent service to the Intent client.

Optionally, the program is further configured to transmit, according to priorities of all the Intent services corresponding to the received Intent service identifiers, to an Intent service with a highest priority among all the Intent services, the Intent data transmitted by the Intent client, and make the Intent service with the highest priority process the Intent data transmitted by the client; furthermore, the program is further configured to, after the Intent service identifiers of the more than one Intent service are received, determine priorities of all the Intent services according to preset priorities of the Intent services, or receive priorities set by a user for all the Intent services.

The program is further configured to receive Intent data returned after the Intent service with the highest priority ends processing, transmit, according to the priorities of all the Intent services, to the next Intent service, the Intent data returned by the current Intent service, and make the next Intent service process the received Intent data, and the rest may be deduced by analogy until execution of the last Intent service ends.

Optionally, the program is further configured to:
start all the Intent services corresponding to the received Intent service identifiers, and meanwhile, transmit, to all the Intent services, the Intent data transmitted by the client to activate all the Intent services; and after prompting the user to select a current to-be-executed Intent service from all the activated Intent services, make the current Intent service selected by the user process the Intent data transmitted by the browser, where an Intent service selected first by the user processes the Intent data transmitted by the client; and
after the current Intent service ends processing, receive the Intent data returned by the current Intent service, prompt the user to select a next Intent service from all the activated Intent services, transmit, to the next Intent service, the Intent data returned by the current Intent service, and make the next Intent service perform processing, and the rest may be deduced by analogy until the user chooses to return to the Intent client.

An embodiment of the present invention further provides a browser, including a processor, a communication interface, a memory, and a bus, the communication interface, and the memory implement communication with each other through the bus;
the communication interface is configured to receive Intent data transmitted by an Intent client, and receive Intent service identifiers of more than one Intent service processing the Intent data;
the processor is configured to execute a program;
the memory is configured to store the program; where
the program is configured to successively make, according to an execution sequence of the Intent services which is determined by the received Intent service identifiers, all the Intent services corresponding to the received Intent service identifiers process Intent data transmitted by the browser, and transmit, to all selected Intent services and the Intent client, Intent data returned by a current Intent service until a last Intent service ends processing.

Optionally, the program is further configured to:
start all the Intent services corresponding to the received Intent service identifiers, and meanwhile, transmit, to all the Intent services, the Intent data transmitted by the client to activate all the Intent services;
after prompting the user to select a current to-be-executed Intent service from all the activated Intent services, make the current Intent service selected by the user process the Intent data transmitted by the browser, where an Intent service selected first by the user processes the Intent data transmitted by the client;
after the current Intent service ends processing, receive Intent data returned by the current Intent service, and transmit, to all the Intent services and the Intent client, the Intent data returned by the current Intent service, and
prompt the user to select a next Intent service from all the activated Intent services, and make the next Intent service perform processing, and the rest may be deduced by analogy until the user chooses to return to the Intent client.

Those of ordinary skill in the art should understand that all or a part of the steps of the foregoing method embodiments may be implemented by a program instructing relevant hardware. The foregoing program may be stored in a computer readable storage medium. When the program is run, the steps of the foregoing method embodiments are performed. The storage medium includes any medium that is capable of storing program codes, such as a ROM, a RAM, a magnetic disk or an optical disk.

## Claims

1. A processing method for multiple Intent services, comprising:
receiving, by a browser, Intent data transmitted by an Intent client, and receiving Intent service identifiers of more than one Intent service that can process the Intent data;
successively making, by the browser, according to an execution sequence of the Intent services which is determined through the received Intent service identifiers, all the Intent services corresponding to the received Intent service identifiers process the Intent data returned by the previous Intent service in the execution sequence, and transmitting by the browser, to a next Intent service, or to all selected Intent services and the Intent client, Intent data returned by a current Intent service until the last Intent service ends processing; and
returning, by the browser, a processing result of the last Intent service to the Intent client.

2. The method according to claim 1, wherein the successively making, by the browser, according to an execution sequence of the Intent services which is determined through the received Intent service identifiers, all the Intent services corresponding to the received Intent service identifiers process the Intent data returned by the previous Intent service in the execution sequence, and transmitting, to a next Intent service, Intent data returned by a current Intent service until the last Intent service ends processing comprises:
transmitting, by the browser, according to priorities of all the Intent services corresponding to the received Intent service identifiers, to an Intent service with a highest priority among all the Intent services, the Intent data transmitted by the Intent client, and making the Intent service with the highest priority process the Intent data transmitted by the client; and
receiving, by the browser, Intent data returned after the Intent service with the highest priority ends processing, transmitting, according to the priorities of all the Intent services, to the next Intent service, the Intent data returned by the current Intent service, and making the next Intent service process the received Intent data, and the rest may be deduced by analogy until execution of the last Intent service ends.

3. The method according to claim 2, wherein after the receiving Intent service identifiers of more than one Intent service processing the Intent data, the method further comprises:
determining, by the browser, priorities of all the Intent services according to preset priorities of the Intent services, or receiving priorities set by a user for all the Intent services.

4. The method according to claim 1, wherein the successively making, by the browser, according to an execution sequence of the Intent services which is determined through the received Intent service identifiers, all the Intent services corresponding to the received Intent service identifiers process the Intent data returned by the previous Intent service in the execution sequence, and transmitting, to a next Intent service, Intent data returned by a current Intent service until the last Intent service ends processing comprises:
starting, by the browser, all the Intent services corresponding to the received Intent service identifiers, and meanwhile, transmitting, to all the Intent services, the Intent data transmitted by the client to activate all the Intent services;
after the browser prompts a user to select a current to-be-executed Intent service from all the activated Intent services, making the current Intent service selected by the user process the Intent data transmitted by the browser, wherein an Intent service selected first by the user processes the Intent data transmitted by the client; and
after the current Intent service ends processing, receiving, by the browser, the Intent data returned by the current Intent service, prompting the user to select the next Intent service from all the activated Intent services, transmitting, to the next Intent service, the Intent data returned by the current Intent service, and making the next Intent service perform processing, and the rest may be deduced by analogy until the user chooses to return to the Intent client.

5. The method according to claim 1, wherein the successively making, by the browser, according to an execution sequence of the Intent services which is determined through the received Intent service identifiers, all the Intent services corresponding to the received Intent service identifiers process the Intent data returned by the previous Intent service in the execution sequence, and transmitting, to all selected Intent services and the Intent client, Intent data returned by a current Intent service until the last Intent service ends processing comprises:
starting, by the browser, all the Intent services corresponding to the received Intent service identifiers, and meanwhile, transmitting, to all the Intent services, the Intent data transmitted by the client to activate all the Intent services;
after the browser prompts a user to select a current to-be-executed Intent service from all the activated Intent services, making the current Intent service selected by the user process the Intent data transmitted by the browser, wherein an Intent service selected first by the user processes the Intent data transmitted by the client; and
after the current Intent service ends processing, receiving, by the browser, Intent data returned by the current Intent service, transmitting, to all the Intent services and the Intent client, the Intent data returned by the current Intent service, prompting the user to select a next Intent service from all the activated Intent services, and making the next Intent service perform processing, and the rest may be deduced by analogy until the user chooses to return to the Intent client.

6. A browser device, comprising:
a receiving module (61), configured to receive Intent data transmitted by an Intent client, receive Intent service identifiers of more than one Intent service that can process the Intent data, and transmit the Intent data and all the Intent service identifiers corresponding to the received Intent service identifiers to a triggering module (62);
the triggering module, configured to successively make, according to an execution sequence of the Intent services which is determined through the received Intent service identifiers, all the Intent services corresponding to the received Intent service identifiers process the Intent data returned by the previous Intent service in the execution sequence, and transmit by the browser, to a next Intent service, or to all selected Intent services and the Intent client, Intent data returned by a current Intent service until the last Intent service ends processing, and return a processing result of the last Intent service to a sending module (63), and
the sending module, configured to return the processing result of the last Intent service to the Intent client.

7. The browser device according to claim 6, wherein
the triggering module is further configured to transmit, according to priorities of all the Intent services corresponding to the received Intent service identifiers, to an Intent service with a highest priority among all the Intent services, the Intent data transmitted by the Intent client, and make the Intent service with the highest priority process the Intent data transmitted by the client; and
the triggering module is further configured to receive Intent data returned after the Intent service with the highest priority ends processing, transmit, according to the priorities of all the Intent services, to a next Intent service, Intent data returned by a current Intent service, and make the next Intent service process the received Intent data, and the rest may be deduced by analogy until execution of a last Intent service ends.

8. The browser device according to claim 7, wherein the triggering module is further configured to, after receiving the Intent service identifiers of the more than one Intent service processing the Intent data, determine priorities of all the Intent services according to preset priorities of the Intent services, or receive priorities set by a user for all the Intent services.

9. The browser device according to claim 6, wherein the triggering module comprises:
an activating unit, configured to start all the Intent services corresponding to the received Intent service identifiers, and meanwhile, transmit, to all the Intent services, the Intent data transmitted by the client to activate all the Intent services; and
a triggering unit, configured to, after prompting the user to select a current to-be-executed Intent service from all the activated Intent services, make the current Intent service selected by the user process the Intent data transmitted by the browser, wherein an Intent service selected first by the user processes the Intent data transmitted by the client; and
the triggering unit is further configured to, after the current Intent service ends processing, receive Intent data returned by the current Intent service, prompt the user to select a next Intent service from all the activated Intent services, transmit, to the next Intent service, the Intent data returned by the current Intent service, and make the next Intent service perform processing, and the rest may be deduced by analogy until the user chooses to return to the Intent client.

10. The browser device according to claim 6, wherein the triggering module comprises:
an activating unit, configured to start all the Intent services corresponding to the received Intent service identifiers, and meanwhile, transmit, to all the Intent services, the Intent data transmitted by the client to activate all the Intent services;
a triggering unit, configured to, after prompting a user to select a current to-be-executed Intent service from all the activated Intent services, make the current Intent service selected by the user process the Intent data transmitted by the browser, wherein an Intent service selected first by the user processes the Intent data transmitted by the client; and
a transmitting unit, configured to, after the current Intent service ends processing, receive Intent data returned by the current Intent service, and transmit, to all the Intent services and the Intent client, the Intent data returned by the current Intent service, wherein
the triggering unit is configured to prompt the user to select a next Intent service from all the activated Intent services, and make the next Intent service perform processing, and the rest may be deduced by analogy until the user chooses to return to the Intent client.

11. A browser device, comprising a processor, a communication interface, a memory, and a bus, and the processor, the communication interface, and the memory implement communication with each other through the bus;
the communication interface is configured to receive Intent data transmitted by an Intent client, and receive Intent service identifiers of more than one Intent service that can process the Intent data;
the processor is configured to execute a program; and the memory is configured to store the program;
wherein the program is configured to execute the method according to any one claim of claims 1-5.

## Patentansprüche

1. Verarbeitungsverfahren für mehrere Intent-Dienste, die folgenden Schritte umfassend:
Empfangen, durch einen Browser, von durch einen Intent-Client gesendeten Intent-Daten und Empfangen von Intent-Dienstkennungen von mehr als einem Intent-Dienst, der die Intent-Daten verarbeiten kann;
sukzessives Veranlassen zum Verarbeiten, durch den Browser, gemäß einer Ausführungssequenz der Intent-Dienste, welche durch die empfangenen Intent-Dienstkennungen bestimmt wird, all der Intent-Dienste, die den empfangenen Intent-Dienstkennungen entsprechen, der durch den vorherigen Intent-Dienst in der Ausfübrungssequenz zurückgegebenen Intent-Daten und Senden, durch den Browser, an einen nächsten Intent-Dienst oder an alle ausgewählten Intent-Dienste und den Intent-Client, von durch einen aktuellen Intent-Dienst zurückgegebenen Intent-Daten bis der letzte Intent-Dienst die Verarbeitung beendet; und
Zurückgeben, durch den Browser, eines Verarbeitungsergebnisses des letzten Intent-Dienstes an den Intent-Client.

2. Verfahren nach Anspruch 1, wobei das sukzessive Veranlassen zum Verarbeiten, durch den Browser, gemäß einer Ausführungssequenz der Intent-Dienste, welche durch die empfangenen Intent-Dienstkennungen bestimmt wird, all der Intent-Dienste, die den empfangenen Intent-Dienstkennungen entsprechen, der durch den vorherigen Intent-Dienst in der Ausführungssequenz zurückgegebenen Intent-Daten und Senden an einen nächsten Intent-Dienst von durch einen aktuellen Intent-Dienst zurückgegebenen Intent-Daten bis der letzte Intent-Dienst die Verarbeitung beendet, die folgenden Schritte umfasst:
Senden, durch den Browser, gemäß Prioritäten von all den Intent-Diensten, die den empfangenen Intent-Dienstkennungen entsprechen, an einen Intent-Dienst mit einer höchsten Priorität unter all den Intent-Diensten, der durch den Intent-Client gesendeten Intent-Daten und Veranlassen zum Verarbeiten des Intent-Dienstes mit der höchsten Priorität der durch den Client gesendeten Intent-Daten; und
Empfangen, durch den Browser, von zurückgegebenen Intent-Daten, nachdem der Intent-Dienst mit der höchsten Priorität die Verarbeitung beendet hat, Senden, gemäß den Prioritäten von all den Intent-Diensten, an den nächsten Intent-Dienst, der durch den aktuellen Intent-Dienst zurückgegebenen Intent-Daten und Veranlassen zum Verarbeiten des nächsten Intent-Dienstes der empfangenen Intent-Daten und der Rest kann durch Analogie abgeleitet werden bis eine Ausführung des letzten Intent-Dienstes endet.

3. Verfahren nach Anspruch 2, wobei das Verfahren, nach dem Empfangen von Intent-Dienstkennungen von mehr als einem die Intent-Daten verarbeitenden Intent-Dienst, ferner den folgenden Schritt umfasst:
Bestimmen, durch den Browser, von Prioritäten von all den Intent-Diensten gemäß voreingestellten Prioritäten der Intent-Dienste oder Empfangen von durch einen Benutzer für all die Intent-Dienste eingestellten Prioritäten.

4. Verfahren nach Anspruch 1, wobei das sukzessive Veranlassen zum Verarbeiten, durch den Browser, gemäß einer Ausführungssequenz der Intent-Dienste, welche durch die empfangenen Intent-Dienstkennungen bestimmt wird, all der Intent-Dienste, die den empfangenen Intent-Dienstkennungen entsprechen, der durch den vorherigen Intent-Dienst in der Ausführungssequenz zurückgegebenen Intent-Daten und Senden an einen nächsten Intent-Dienst von durch einen aktuellen Intent-Dienst zurückgegebenen Intent-Daten bis der letzte Intent-Dienst die Verarbeitung beendet, die folgenden Schritte umfasst:
Starten, durch den Browser, all der Intent-Dienste, die den empfangenen Intent-Dienstkennungen entsprechen und, zwischenzeitlich, Senden an all die Intent-Dienste, der durch den Client gesendeten Intent-Daten, um all die Intent-Dienste zu aktivieren;
nachdem der Browser einen Benutzer zum Auswählen eines aktuellen auszuführenden Intent-Dienstes aus all den aktivierten Intent-Diensten aufgefordert hat, Veranlassen zum Verarbeiten des aktuellen durch den Benutzer ausgewählten Intent-Dienstes der durch den Browser gesendeten Intent-Daten, wobei ein zuerst durch den Benutzer ausgewählter Intent-Dienst die durch den Client gesendeten Intent-Daten verarbeitet; und
nachdem der aktuelle Intent-Dienst das Verarbeiten beendet hat, Empfangen, durch den Browser, der durch den aktuellen Intent-Dienst zurückgegebenen Intent-Daten, Auffordern des Benutzers zum Auswählen des nächsten Intent-Dienstes aus all den aktivierten Intent-Diensten, Senden, an den nächsten Intent-Dienst, der durch den aktuellen Intent-Dienst zurückgegebenen Intent-Daten und Veranlassen des nächsten Intent-Dienstes zum Durchführen von Verarbeiten, und der Rest kann durch Analogie abgeleitet werden bis sich der Benutzer entscheidet, zu dem Intent-Client zurückzukehren.

5. Verfahren nach Anspruch 1, wobei das sukzessive Veranlassen zum Verarbeiten, durch den Browser, gemäß einer Ausführungssequenz der Intent-Dienste, welche durch die empfangenen Intent-Dicnstkennungen bestimmt wird, all der Intent-Dienste, die den empfangenen Intent-Dienstkennungen entsprechen, der durch den vorherigen Intent-Dienst in der Ausführungssequenz zurückgegebenen Intent-Daten und Senden, an alle ausgewählten Intent-Dienste und den Intent-Client von durch einen aktuellen Intent-Dienst zurückgegebenen Intent-Daten bis der letzte Intent-Dienst die Verarbeitung beendet, die folgenden Schritte umfasst:
Starten, durch den Browser, all der Intent-Dienste, die den empfangenen Intent-Dienstkennungen entsprechen und, zwischenzeitlich, Senden an all die Intent-Dienste, der durch den Client gesendeten Intent-Daten, um all die Intent-Dienste zu aktivieren;
nachdem der Browser einen Benutzer zum Auswählen eines aktuellen auszuführenden Intent-Dienstes aus all den aktivierten Intent-Diensten aufgefordert hat, Veranlassen zum Verarbeiten des aktuellen durch den Benutzer ausgewählten Intent-Dienstes der durch den Browser gesendeten Intent-Daten, wobei ein zuerst durch den Benutzer ausgewählter Intent-Dienst die durch den Client gesendeten Intent-Daten verarbeitet; und
nachdem der aktuelle Intent-Dienst das Verarbeiten beendet hat, Empfangen, durch den Browser, von durch den aktuellen Intent-Dienst zurückgegebenen Intent-Daten, Senden, an all die Intent-Dienste und den Intent-Client, der durch den aktuellen Intent-Dienst zurückgegebenen Intent-Daten, Auffordern des Benutzers zum Auswählen eines nächsten Intent-Dienstes aus all den aktivierten Intent-Diensten, und Veranlassen des nächsten Intent-Dienstes zum Durchführen von Verarbeiten, und der Rest kann durch Analogie abgeleitet werden bis sich der Benutzer entscheidet, zu dem Intent-Client zurückzukehren.

6. Browservorrichtung, die Folgendes umfasst:
ein Empfangsmodul (61), das ausgelegt ist zum Empfangen von durch einen Intent-Client gesendeten Intent-Daten, Empfangen von Intent-Dienstkennungen von mehr als einem Intent-Dienst, der die Intent-Daten verarbeiten kann, und Senden der Intent-Daten und all der Intent-Dienstkennungen, die den empfangenen Dienstkennungen entsprechen, an ein Auslösemodul (62);
das Auslösemodul, das ausgelegt ist zum sukzessiven Veranlassen zum Verarbeiten gemäß einer Ausführungssequenz der Intent-Dienste, welche durch die empfangenen Intent-Dienstkennungen bestimmt wird, all der Intent-Dienste, die den empfangenen Intent-Dienstkennungen entsprechen, der durch den vorherigen Intent-Dienst in der Ausführungssequenz zurückgegebenen Intent-Daten und Senden, durch den Browser, an einen nächsten Intent-Dienst oder an alle ausgewählten Intent-Dienste und den Intent-Client, von durch einen aktuellen Intent-Dienst zurückgegebenen Intent-Daten bis der letzte Intent-Dienst die Verarbeitung beendet; und Zurückgeben eines Verarbeitungsergebnisses des letzten Intent-Dicnstes an ein Sendemodul (63), und das Sendemodul, das ausgelegt ist zum Zurückgeben des Verarbeitungsergebnisses des letzten Intent-Dienstes an den Intent-Client.

7. Browservorrichtung nach Anspruch 6, wobei
das Auslösemodul ferner ausgelegt ist zum Senden gemäß Prioritäten von all den Intcnt-Diensten, die den empfangenen Intent-Dienstkennungen entsprechen, an einen Intent-Dienst mit einer höchsten Priorität unter all den Intent-Diensten, der durch den Intent-Client gesendeten Intent-Daten und Veranlassen zum Verarbeiten des Intent-Dienstes mit der höchsten Priorität der durch den Client gesendeten Intent-Daten,
und
das Auslösemodul ferner ausgelegt ist zum Empfangen von zurückgegebenen Intent-Daten, nachdem der Intent-Dienst mit der höchsten Priorität die Verarbeitung beendet hat, Senden, gemäß den Prioritäten von all den Intent-Diensten, an einen nächsten Intent-Dienst, von durch einen aktuellen. Intent-Dienst zurückgegebenen Intent-Daten und Veranlassen zum Verarbeiten des nächsten Intent-Dienstes der empfangenen Intent-Daten und der Rest kann durch Analogie abgeleitet werden bis eine Ausführung eines letzten Intent-Dienstes endet.

8. Browservorrichtung nach Anspruch 7, wobei
das Auslösemodul ferner ausgelegt ist zum, nach dem Empfangen der Intent-Dienstkennungen von dem mehr als einen die Intent-Daten verarbeitenden Intent-Dienst, Bestimmen von Prioritäten von all den Intent-Diensten gemäß voreingestellten Prioritäten der Intent-Dienste oder Empfangen von durch einen Benutzer für all die Intent-Dienste eingestellten Prioritäten.

9. Browservorrichtung nach Anspruch 6, wobei das Auslösemodul Folgendes umfasst:
eine Aktivierungseinheit, die ausgelegt ist zum
Starten all der Intent-Dienste, die den empfangenen Intent-Dienstkennungen entsprechen und, zwischenzeitlich, Senden an all die Intent-Dienste, der durch den Client gesendeten Intent-Daten, um all die Intent-Dienste zu aktivieren; und
eine Auslöseeinheit, die ausgelegt ist zum, nachdem der Benutzer zum Auswählen eines aktuellen auszuführenden Intent-Dienstes aus all den aktivierten Intent-Diensten aufgefordert wurde, Veranlassen zum Verarbeiten des aktuellen durch den Benutzer ausgewählten Intent-Dienstes der durch den Browser gesendeten Intent-Daten, wobei ein zuerst durch den Benutzer ausgewählter Intent-Dienst die durch den Client gesendeten Intent-Daten verarbeitet; und
die Auslöseeinheit ferner ausgelegt ist zum, nachdem der aktuelle Intent-Dienst das Verarbeiten beendet hat, Empfangen von durch den aktuellen Intent-Dienst zurückgegebenen Intent-Daten, Auffordern des Benutzers zum Auswählen eines nächsten Intent-Dienstes aus all den aktivierten Intent-Diensten, Senden, an den nächsten Intent-Dienst, der durch den aktuellen Intent-Dienst zurückgegebenen Intent-Daten und Veranlassen des nächsten Intent-Dienstes zum Durchführen von Verarbeiten, und der Rest kann durch Analogie abgeleitet werden bis sich der Benutzer entscheidet, zu dem Intent-Client zurückzukehren.

10. Browservorrichtung nach Anspruch 6, wobei das Auslösemodul Folgendes umfasst:
eine Aktivierungseinheit, die ausgelegt ist zum Starten all der Intent-Dienste, die den empfangenen Intent-Dienstkennungen entsprechen und, zwischenzeitlich, Senden an all die Intent-Dienste, der durch den Client gesendeten Intent-Daten, um all die Intent-Dienste zu aktivieren;
eine Auslöseeinheit, die ausgelegt ist zum, nachdem ein Benutzer zum Auswählen eines aktuellen auszuführenden Intent-Dienstes aus all den aktivierten Intent-Diensten aufgefordert wurde, Veranlassen zum Verarbeiten des aktuellen durch den Benutzer ausgewählten Intent-Dienstes der durch den Browser gesendeten Intent-Daten, wobei ein zuerst durch den Benutzer ausgewählter Intent-Dienst die durch den Client gesendeten Intent-Daten verarbeitet; und
eine Sendeeinheit, die ausgelegt ist zum, nachdem der aktuelle Intent-Dienst das Verarbeiten beendet hat, Empfangen von durch den aktuellen Intent-Dienst zurückgegebenen Intent-Daten, und Senden, an all die Intent-Dienste und den Intent-Client, der durch den aktuellen Intent-Dienst zurückgegebenen Intent-Daten, wobei die Auslöseeinheit ausgelegt ist zum Auffordern des Benutzers zum Auswählen eines nächsten Intent-Dienstes aus all den aktivierten Intent-Diensten, und Veranlassen des nächsten Intent-Dienstes zum Durchführen von Verarbeiten, und der Rest kann durch Analogie abgeleitet werden bis sich der Benutzer entscheidet, zu dem Intent-Client zurückzukehren.

11. Browservorrichtung, umfassend einen Prozessor, eine Kommunikationsschnittstelle, einen Speicher und einen Bus, und wobei der Prozessor, die Kommunikationsschnittstelle und der Speicher Kommunikation miteinander durch den Bus implementieren;
wobei die Kommunikationsschnittstelle ausgelegt ist zum Empfangen von durch einen Intent-Client gesendeten Intent-Daten und zum Empfangen von Intent-Dienstkennungen von mehr als einem Intent-Dienst, der die Intent-Daten verarbeiten kann;
wobei der Prozessor ausgelegt ist zum Ausführen eines Programms; und der Speicher ausgelegt ist zum Speichern des Programms;
wobei das Programm ausgelegt ist zum Ausführen des Verfahrens nach einem der Ansprüche 1-5.

## Revendications

1. Procédé de traitement de multiples services Intent, consistant à :
recevoir, par un navigateur, des données Intent transmises par un client Intent, et recevoir des identifiants de service Intent de plusieurs services Intent qui peuvent traiter les données Intent ;
successivement amener, par le navigateur, selon une séquence d'exécution des services Intent qui est déterminée par l'intermédiaire des identifiants de service Intent reçus, tous les services Intent correspondant aux identifiants de service Intent reçus à traiter les données Intent renvoyées par le service Intent précédent dans la séquence d'exécution, et transmettre, par le navigateur, à un service Intent suivant, ou à tous les services Intent sélectionnés et au client Intent, les données Intent renvoyées par un service Intent en cours jusqu'à ce que le dernier service Intent termine le traitement ; et
renvoyer, par le navigateur, un résultat de traitement du dernier service Intent au client Intent.

2. Procédé selon la revendication 1, dans lequel le fait de successivement amener, par le navigateur, selon une séquence d'exécution des services Intent qui est déterminée par l'intermédiaire des identifiants de service Intent reçus, tous les services Intent correspondant aux identifiants de service Intent reçus à traiter les données Intent renvoyées par le service Intent précédent dans la séquence d'exécution, et transmettre, à un service Intent suivant, les données Intent renvoyées par un service Intent en cours jusqu'à ce que le dernier service Intent termine le traitement, consiste à :
transmettre, par le navigateur, selon des priorités de tous les services Intent correspondant aux identifiants de service Intent reçus, à un service Intent ayant une priorité maximale parmi tous les services Intent, les données Intent transmises par le client Intent, et amener le service Intent ayant la priorité maximale à traiter les données Intent transmises par le client ; et
recevoir, par le navigateur, des données Intent renvoyées après que le service Intent ayant la priorité maximale a terminé le traitement, transmettre, selon les priorités de tous les services Intent, au service Intent suivant, les données Intent renvoyées par le service Intent en cours, et amener le service Intent suivant à traiter les données Intent reçues, et le reste pouvant être déduit par analogie jusqu'à la fin de l'exécution du dernier service Intent.

3. Procédé selon la revendication 2, le procédé consistant en outre, après la réception d'identifiants de service Intent de plusieurs services Intent traitant les données Intent, à:
déterminer, par le navigateur, des priorités de tous les services Intent selon des priorités prédéfinies des services Intent, ou recevoir des priorités définies par un utilisateur pour tous les services Intent.

4. Procédé selon la revendication 1, dans lequel le fait de successivement amener, par le navigateur, selon une séquence d'exécution des services Intent qui est déterminée par l'intermédiaire des identifiants de service Intent reçus, tous les services Intent correspondant aux identifiants de service Intent reçus à traiter les données Intent renvoyées par le service Intent précédent dans la séquence d'exécution, et transmettre, à un service Intent suivant, les données Intent renvoyées par un service Intent en cours jusqu'à ce que le dernier service Intent termine le traitement, consiste à :
démarrer, par le navigateur, tous les services Intent correspondant aux identifiants de service Intent reçus, et dans le même temps, transmettre, à tous les services Intent, les données Intent transmises par le client pour activer tous les services Intent ;
après que le navigateur a invité un utilisateur à sélectionner un service Intent à exécuter en cours parmi tous les services Intent activés, amener le service Intent en cours sélectionné par l'utilisateur à traiter les données Intent transmises par le navigateur, un service Intent sélectionné en premier par l'utilisateur traitant les données Intent transmises par le client ; et
après que le service Intent en cours a terminé le traitement, recevoir, par le navigateur, les données Intent renvoyées par le service Intent en cours, inviter l'utilisateur à sélectionner le service Intent suivant parmi tous les services Intent activés, transmettre, au service Intent suivant, les données Intent renvoyées par le service Intent en cours, et amener le service Intent suivant à réaliser un traitement, et le reste pouvant être déduit par analogie jusqu'à ce que l'utilisateur choisisse de réaliser un renvoi au client Intent,

5. Procédé selon la revendication 1, dans lequel le fait de successivement amener, par le navigateur, selon une séquence d'exécution des services Intent qui est déterminée par l'intermédiaire des identifiants de service Intent reçus, tous les services Intent correspondant aux identifiants de service Intent reçus à traiter les données Intent renvoyées par le service Intent précédent dans la séquence d'exécution, et transmettre, à tous les services Intent sélectionnés et au client Intent, les données Intent renvoyées par un service Intent en cours jusqu'à ce que le dernier service Intent termine le traitement, consiste à :
démarrer, par le navigateur, tous les services Intent correspondant aux identifiants de service Intent reçus, et dans le même temps, transmettre, à tous les services Intent, les données Intent transmises par le client pour activer tous les services Intent ;
après que le navigateur a invité un utilisateur à sélectionner un service Intent à exécuter en cours parmi tous les services Intent activés, amener le service Intent en cours sélectionné par l'utilisateur à traiter les données Intent transmises par le navigateur, un service Intent sélectionné en premier par l'utilisateur traitant les données Intent transmises par le client ; et
après que le service Intent en cours a terminé le traitement, recevoir, par le navigateur, des données Intent renvoyées par le service Intent en cours, transmettre, à tous les services Intent et au client Intent, les données Intent renvoyées par le service Intent en cours, inviter l'utilisateur à sélectionner un service Intent suivant parmi tous les services Intent activés, et amener le service Intent suivant à réaliser un traitement, et le reste pouvant être déduit par analogie jusqu'à ce que l'utilisateur choisisse de réaliser un renvoi au client Intent,

6. Dispositif de navigation, comprenant :
un module de réception (61), conçu pour recevoir des données Intent transmises par un client Intent, recevoir des identifiants de service Intent de plusieurs services Intent qui peuvent traiter les données Intent, et transmettre les données Intent et tous les identifiants de service Intent correspondant aux identifiants de service Intent reçus à un module de déclenchement (62) ;
le module de déclenchement, conçu pour successivement amener, selon une séquence d'exécution des services Intent qui est déterminée par l'intermédiaire des identifiants de service Intent reçus, tous les services Intent correspondant aux identifiants de service Intent reçus à traiter les données Intent renvoyées par le service Intent précédent dans la séquence d'exécution, et transmettre, par le navigateur, à un service Intent suivant, ou à tous les services Intent sélectionnés et au client Intent, les données Intent renvoyées par un service Intent en cours jusqu'à ce que le dernier service Intent termine le traitement, et renvoyer un résultat de traitement du dernier service Intent à un module d'envoi (63) ; et
le module d'envoi, conçu pour renvoyer le résultat de traitement du dernier service Intent au client Intent.

7. Dispositif de navigation selon la revendication 6, dans lequel :
le module de déclenchement est en outre conçu pour transmettre, selon des priorités de tous les services Intent correspondant aux identifiants de service Intent reçus, à un service Intent ayant une priorité maximale parmi tous les services Intent, les données Intent transmises par le client Intent, et amener le service Intent ayant la priorité maximale à traiter les données Intent transmises par le client ; et
le module de déclenchement est en outre conçu pour recevoir des données Intent renvoyées après que le service Intent ayant la priorité maximale a terminé le traitement, transmettre, selon les priorités de tous les services Intent, à un service Intent suivant, les données Intent renvoyées par un service Intent en cours, et amener le service Intent suivant à traiter les données Intent reçues, et le reste peut être déduit par analogie jusqu'à la fin de l'exécution d'un dernier service Intent.

8. Dispositif de navigation selon la revendication 7, dans lequel le module de déclenchement est en outre conçu pour, après la réception des identifiants de service Intent de plusieurs services Intent traitant les données Intent, déterminer des priorités de tous les services Intent selon des priorités prédéfinies des services Intent, ou recevoir des priorités définies par un utilisateur pour tous les services Intent.

9. Dispositif de navigation selon la revendication 6, dans lequel le module de déclenchement comprend :
une unité d'activation, conçue pour démarrer tous les services Intent correspondant aux identifiants de service Intent reçus, et dans le même temps, transmettre, à tous les services Intent, les données Intent transmises par le client pour activer tous les services Intent ; et
une unité de déclenchement, conçue pour, après avoir invité l'utilisateur à sélectionner un service Intent à exécuter en cours parmi tous les services Intent activés, amener le service Intent en cours sélectionné par l'utilisateur à traiter les données Intent transmises par le navigateur, un service Intent sélectionné en premier par l'utilisateur traitant les données Intent transmises par le client ; et
l'unité de déclenchement est en outre conçue pour, après que le service Intent en cours a terminé le traitement, recevoir des données Intent renvoyées par le service Intent en cours, inviter l'utilisateur à sélectionner un service Intent suivant parmi tous les services Intent activés, transmettre, au service Intent suivant, les données Intent renvoyées par le service Intent en cours, et amener le service Intent suivant à réaliser un traitement, et le reste peut être déduit par analogie jusqu'à ce que l'utilisateur choisisse de réaliser un renvoi au client Intent.

10. Dispositif de navigation selon la revendication 6, dans lequel le module de déclenchement comprend :
une unité d'activation, conçue pour démarrer tous les services Intent correspondant aux identifiants de service Intent reçus, et dans le même temps, transmettre, à tous les services Intent, les données Intent transmises par le client pour activer tous les services Intent ;
une unité de déclenchement, conçue pour, après avoir invité un utilisateur à sélectionner un service Intent à exécuter en cours parmi tous les services Intent activés, amener le service Intent en cours sélectionné par l'utilisateur à traiter les données Intent transmises par le navigateur, un service Intent sélectionné en premier par l'utilisateur traitant les données Intent transmises par le client ; et
une unité de transmission, conçue pour, après que le service Intent en cours a terminé le traitement, recevoir des données Intent renvoyées par le service Intent en cours, et transmettre, à tous les services Intent et au client Intent, les données Intent renvoyées par le service Intent en cours,
l'unité de déclenchement étant conçue pour inviter l'utilisateur à sélectionner un service Intent suivant parmi tous les services Intent activés, et amener le service Intent suivant à réaliser un traitement, et le reste peut être déduit par analogie jusqu'à ce que l'utilisateur choisisse de réaliser un renvoi au client Intent.

11. Dispositif de navigation, comprenant un processeur, une interface de communication, une mémoire et un bus, et le processeur, l'interface de communication et la mémoire mettent en oeuvre une communication les uns avec les autres par l'intermédiaire du bus ;
l'interface de communication est conçue pour recevoir des données Intent transmises par un client Intent, et recevoir des identifiants de service Intent de plusieurs services Intent qui peuvent traiter les données Intent ;
le processeur est conçu pour exécuter un programme ; et la mémoire est conçue pour stocker le programme ;
le programme étant conçu pour exécuter le procédé selon l'une quelconque des revendications 1 à 5.
